# EUROPÄISCHE PATENTANMELDUNG

(11) **EP 4 446 639 A1**
(43) Veröffentlichungstag der Anmeldung: **16.10.2024**
(21) Anmeldenummer: 23020181.6
(22) Anmeldetag: 14.04.2023
(51) Int. Cl.: F17C 5/06

(54) **WASSERSTOFF-TANKSTELLE**

(71) Anmelder: Linde GmbH, 82049 Pullach (DE)
(72) Erfinder: Brücklmeier, Martin, 82049 Pullach (DE); Schäfer, Simon, 82049 Pullach (DE); Acher, Thomas, 82049 Pullach (DE); Lachermeier, Armin, 82049 Pullach (DE); Gallina, Tibor Robert, 82049 Pullach (DE); Janzen, Andreas, 82049 Pullach (DE); Kropf, Annika, 82049 Pullach (DE); Mayer, Hubert, 82049 Pullach (DE); Reichardt, Hannes, 82049 Pullach (DE); Vidic, Karl Jojo, 82049 Pullach (DE)
(74) Vertreter: Zahn, Christoph

(57) **Zusammenfassung**

Es wird eine Wasserstoff-Tankstelle beschrieben, die wenigstens ein Wärmeübertragersystem aufweist. Sie ermöglicht eine gleichzeitige Wasserstoff-Betankung mit 350 bar sowie 700 bar.

## Beschreibung

Die vorliegende Erfindung betrifft eine Wasserstoff-Tankstelle, die für die Betankung von Speicherbehältern, insbesondere von Fahrzeugtanks, bei wenigstens zwei unterschiedlichen Druckniveaus geeignet ist.

Die Betankung von Fahrzeugen mit gasförmigem Wasserstoff erfolgt üblicherweise auf zwei Druckniveaus, nämlich bei einem Druck von 350 bar oder 700 bar. Während Betankungen bei 350 bar insbesondere bei Bussen und Lkw zum Einsatz kommen, werden Pkw vorzugsweise bei 700 bar betankt. Für die Verdichtung des Wasserstoffs kommen je nach Ausgangszustands des Wasserstoffs - dieser liegt an Wasserstoff-Tankstellen üblicherweise in flüssiger oder gasförmiger Form vor- zwei unterschiedliche Technologien zur Anwendung.

Flüssiger Wasserstoff wird mittels einer sog. Kryopumpe bis zu einem Druck von 1000 bar verdichtet. Nach der Verdichtung des flüssigen Wasserstoffs in der Kryopumpe wird dem kryogenen Wasserstoff in einem Wärmeübertrager-System mithilfe eines Kälteträgers, bspw. Freezium, Wärme zugeführt. Der Kälteträger kühlt sich dabei ab und ermöglicht so in seiner Funktion als Kältespeicher eine Zwischenspeicherung der Kälteleistung. Unmittelbar vor dem Betankungsvorgang wird diese gespeicherte Kälteleistung genutzt, um den gasförmigen Wasserstoff in der Zapfsäule bzw. dem Dispenser mittels Wärmeübertrager auf die benötigte Betankungstemperatur abzukühlen bzw. zu konditionieren. Diese Konditionierung ist aufgrund der Erwärmung des überführten, gasförmigen Wasserstoffs im Fahrzeugtank bei der Betankung notwendig, um eine zu hohe und unzulässige Temperatur des Fahrzeugtanks zu verhindern; hierbei beträgt die optimale Betankungstemperatur -40 °C.

Gasförmiger Wasserstoff wird mittels eines Gaskompressors, vorzugsweise mittels eines Kolbenverdichters auf einen Druck bis zu 1000 bar verdichtet. Im Gegensatz zur vorbeschriebenen Kryopumpentechnologie erfolgt die anschließende thermische Konditionierung des verdichteten Wasserstoffs für den Betankungsvorgang über eine separate Kälteanlage, woraus ein zusätzlicher Energiebedarf resultiert.

Die steigendende Anzahl an Wasserstoff-Pkw und -Lkw führt zu einem steigenden Bedarf an Wasserstoff-Tankstellen, bei denen eine Betankung von Pkw und Lkw bei den erwähnten Betankungsdruckniveaus von 350 bar und 700 bar möglich ist. Zudem ist erforderlich, dass diese Tankstellen vergleichsweise hohe Betankungsraten aufweisen. Um dies zu erreichen ist eine Erweiterung der bestehenden Tankstellen-Systeme erforderlich. Eine bloße Skalierung der vorbeschriebenen Technologien ist nur bei Inkaufnahme gravierender technischer und kommerzieller Einschränkungen möglich.

Die Betankung großer Wasserstoffmengen erfordert einen erhöhten Bedarf an Kälteleistung, insbesondere bei der Konditionierung am Dispenser. Vor allem bei Systemen auf Basis eines Gasverdichters ist der Einsatz einer leistungsstarken Kälteanlage - mit bis zu einem Megawatt elektrischer Anschlussleistung - erforderlich. Der hohe Stromverbrauch und die hohen Kosten der Kälteanlage steigern sowohl die Betriebskosten (OPEX) als auch die Investitionskosten (CAPEX) der Wasserstoff-Tankstelle.

Aufgabe der vorliegenden Erfindung ist es, eine Wasserstoff-Tankstelle anzugeben, die die gleichzeitige Abgabe von Wasserstoff bei unterschiedlichen Druckniveaus und mit hohen Betankungsraten bzw. Durchsätzen ermöglicht.

Zur Lösung dieser Aufgabe wird eine Wasserstoff-Tankstelle vorgeschlagen, die
a) einen Speicherbehälter für verflüssigten Wasserstoff,
b) eine Kryopumpe, mittels der aus dem Speicherbehälter entnommener Wasserstoff auf einen Zwischendruck gefördert wird,
c) einen ersten Speicherbehälter, der der Speicherung des auf den Zwischendruck geförderten Wasserstoffs dient,
d) einen ersten Dispenser, der der Abgabe des auf den Zwischendruck geförderten und/oder aus dem ersten Speicherbehälter entnommenen Wasserstoffs dient,
e) einen Verdichter, mittels dem der auf einen Zwischendruck geförderte Wasserstoff auf einen Enddruck verdichtet wird,
f) einen zweiten Speicherbehälter, der der Speicherung des auf den Enddruck geförderten Wasserstoffs dient,
g) einen zweiten Dispenser, der der Abgabe des auf den Enddruck geförderten und/oder aus dem zweiten Speicherbehälter entnommenen Wasserstoffs dient, und
h) wenigstens ein Wärmeübertragersystem, das der Anwärmung des auf einen Zwischendruck geförderten Wasserstoffs dient,
i) wobei das Wärmeübertragersystem derart ausgebildet ist, dass die in ihm gespeicherte Kälteleistung zur Kühlung des Verdichters und/oder zur Konditionierung des Wasserstoffs am ersten und/oder zweiten Dispensers genutzt werden kann.

Aufgrund der höheren Speicherdichte weist die erfindungsgemäße Wasserstoff-Tankstelle, die vergleichsweise hohe Durchsätze ermöglicht, einen Speicherbehälter für verflüssigten Wasserstoff auf. Die Speicherung des verflüssigten Wasserstoffs erfolgt vorzugsweise bei 1,5 barg bis 8 barg. Die dem Speicherbehälter nachgeschaltete Kryopumpe ist vorzugsweise als zweistufige Kolbenpumpe ausgebildet. Mit ihr kann der aus dem Speicherbehälter entnommene flüssige Wasserstoff mit sehr niedrigem spezifischen Energieverbrauch und entsprechend geringen Kosten auf einen Zwischendruck von 300 bar bis 600 bar gefördert bzw. verdichtet werden. Eine derartige Verdichtung ist aufgrund der physikalischen Restriktionen der Gaskompression mit einem Gaskompressor wesentlich ineffizienter und würde eine Vielzahl an Verdichterstufen erfordern. Die Kryopumpe wird bevorzugt hydraulisch angetrieben.

Der auf den Zwischendruck verdichtete Wasserstoff wird erfindungsgemäß in einem Wärmeübertragersystem angewärmt, vorzugsweise auf Umgebungstemperatur. Der in dem Wärmeübertragersystem eingesetzte Kälteträger kühlt dabei ab und ermöglicht so eine Zwischenspeicherung der Kälteleistung.

Der auf den Zwischendruck verdichtete und anschließend erwärmte Wasserstoff wird erfindungsgemäß in einem ersten Speicherbehälter zwischengespeichert und/oder direkt über eine Zapfsäule bzw. einen Dispenser in einen Fahrzeugtank überführt. Der vorgenannte Speicherbehälter wird in der Praxis als Speicherbank ausgeführt.

Erfindungsgemäß ist der Kryopumpe ein Verdichter nachgeschaltet, der den auf einen Zwischendruck verdichteten Wasserstoff auf einen Enddruck, vorzugsweise 700 bis 1000 bar, verdichtet. Hierbei ist der Verdichter bevorzugt als Kolbenkompressor ausgebildet. Die in dem Wärmeübertragersystem gespeicherte Kälteleistung wird erfindungsgemäß genutzt, um diesen Verdichter zu kühlen. Da der Wasserstoff bereits bei einem Druck zwischen 300 und 600 bar vorliegt, kann der Verdichter aufgrund des hohen Eingangsdrucks mit wenigen Verdichterstufen effizient auf den gewünschten Enddruck verdichten. Zudem ist bei einem Verdichter von Vorteil, dass er als umgebungswarmes und nicht als kryogenes System ausgeführt wird. Der Verdichter muss folglich für den Betrieb nicht auf eine tiefe Betriebstemperatur abgekühlt werden und kann somit jederzeit starten. Zudem sind die verschleißintensiven Verdichterstufen für Wartungsarbeiten direkt zugänglich. Je nach Durchflussanforderungen des auf den Enddruck verdichteten Wasserstoffs sind ggf. mehrere Verdichter bzw. Verdichterstufen parallel zu schalten.

Der auf den Enddruck verdichtete Wasserstoff kann in einem zweiten Speicherbehälter bzw. Speicherbank gespeichert oder direkt einem zweiten Dispenser, der der Abgabe des auf den Enddruck geförderten und/oder aus dem zweiten Speicherbehälter entnommenen Wasserstoffs dient, zugeführt werden.

Aus den beiden Speicherbehältern bzw. Speicherbanken können Fahrzeuge nun parallel bei zwei unterschiedlichen Druckniveaus, vorzugsweise bei 350 bar und 700 bar betankt werden.

Wie bereits erwähnt, muss der in den Fahrzeugtank überzuführende Wasserstoff vor der Betankung konditioniert werden. Hierfür wird erfindungsgemäß die in dem Wärmeübertragersystem gespeicherte Kälteleistung genutzt.

Würde man einen hohen Durchfluss allein mit dem Einsatz von Kryopumpen bewältigen wollen, müssten mehrere Kryopumpen parallel verbaut werden, was einen großen Aufwand hinsichtlich kryogener Apparaturen, bspw. MSR-Technik und Ventilen, am Flüssig-Wasserstoff-Tank erforderlich machen würde. Zudem steigt der Verschleiß der Kryopumpen bei Drücken über 500 bar signifikant an. Dies ist von erheblicher Relevanz, da der Wartungsaufwand einer Kryopumpe verglichen mit einem Verdichter deutlich höher ist. Grund dafür ist unter anderem das zeit- und arbeitsintensive Anwärmen sowie das Inertisieren des gesamten Pumpensystems, das aus der eigentlichen Pumpe und einem vakuumisolierten Pumpenbehälter besteht.

Bei der erfindungsgemäßen Wasserstoff-Tankstelle werden die Technologien "Kryopumpe" und "Verdichter" nunmehr kombiniert. Damit wird ermöglicht, die im kryogenen, flüssigen Wasserstoff gespeicherte Kälteleistung zu nutzen. Die Zwischenspeicherung dieser Kälteleistung unter Zuhilfenahme eines oder mehrerer Wärmeübertragersysteme schafft eine thermische Kopplung der unterschiedlichen Tankstellenkomponenten und ermöglicht so eine bedarfsgerechte Kühlung der Hauptkomponenten, insbesondere des bzw. der Verdichter, und Konditionierung des zu vertankenden Wasserstoffs. Zudem kann durch diese thermische Kopplung auf den Einsatz einer seperaten Kälteanlage verzichtet werden. Dies reduziert den Gesamtenergiebedarf der Tankstelle und erlaubt in der Folge effiziente Betankungen mit 350 bar sowie 700 bar. Die Kombination der beiden Technologien führt zudem dazu, dass die verschiedenen Verdichtertechnologien in ihren effizienten Druckbereichen arbeiten. Hierdurch lassen sich insbesondere der spezifische Energieverbrauch sowie die Wartungskosten wesentlich minimieren.

Durch die Kombination beider Technologien mit einem ganzheitlichen Thermomanagement wird eine einfache Möglichkeit geschaffen, die eingangs beschriebenen Anforderungen, wie hoher Durchsatz, niedriger CAPEX und OPEX, an eine Wasserstoff-Tankstelle abzudecken.

Weitere vorteilhafte Ausgestaltungen der erfindungsgemäßen Wasserstoff-Tankstelle sind Gegenstände der abhängigen Patentansprüche.

Die erfindungsgemäße Wasserstoff-Tankstelle sowie weitere vorteilhafte Ausgestaltungen derselben seien nachfolgend anhand des in der **Figur** dargestellten Ausführungsbeispiels näher erläutert. Dieses zeigt eine erfindungsgemäße Wasserstoff-Tankstelle, bei der, wie nachfolgend erläutert werden wird, zwei Wärmeübertragersysteme vorgesehen sind.

Der aus dem Speicherbehälter 1 für Flüssig-Wasserstoff entnommene Wasserstoff wird mittels der Kryopumpe 2 auf einen Zwischendruck von 300 bar bis 600 bar gefördert bzw. verdichtet. Vorzugsweise sind der Speicherbehälter 1, die Kryopumpe 2 und/oder die nachfolgend noch beschriebenen Anlagenbestandteile, wie Verdichter, Speicherbehälter, Dispenser und Wärmeübertragersystem redundant ausgebildet. Der auf den Zwischendruck verdichtete Wasserstoff weist am Ausgang der Kryopumpe 2 eine Temperatur zwischen 35 und 70 K auf. In den Wärmetauschern 3 und 4 wird der Wasserstoff gegen die Kälteträger zweier Wärmeübertragersysteme, auf die im Folgenden näher eingegangen wird, auf etwa Umgebungstemperatur angewärmt. Daran anschließend kann der Wasserstoff in einem ersten Speicherbehälter bzw. einer ersten Speicherbank 5 auf dem Zwischendruck gespeichert oder unmittelbar über einen ersten Dispenser 6 abgegeben werden. Diesem Dispenser 6 ist ein Wärmetauscher 13 zugeordnet, der, wie im Folgenden erläutert werden wird, der Konditionierung des abzugebenden Wasserstoffs dient. Üblicherweise erfolgt die Entnahme des über den Dispenser 6 abzugebenden Wasserstoffs aus der ersten Speicherbank 5.

Der Kryopumpe 2 sowie der ersten Speicherbank 5 nachgeschaltet ist ein Verdichter 7, der der Verdichtung des Wasserstoffs auf den Enddruck von 700 bar bis 1000 bar dient. Der Verdichter 7 ist bevorzugt als Kolbenkompressor ausgeführt. Der derart verdichtete Wasserstoff wird in einem zweiten Speicherbehälter bzw. einer zweiten Speicherbank 8 zwischengespeichert oder unmittelbar über einen zweiten Dispenser 9 abgegeben. Auch diesem Dispenser 9 ist ein Wärmetauscher 15 zugeordnet, der, wie im Folgenden erläutert werden wird, der Konditionierung des abzugebenden Wasserstoffs dient. Üblicherweise erfolgt die Entnahme des über den Dispenser 9 abzugebenden Wasserstoffs aus der zweiten Speicherbank 8.

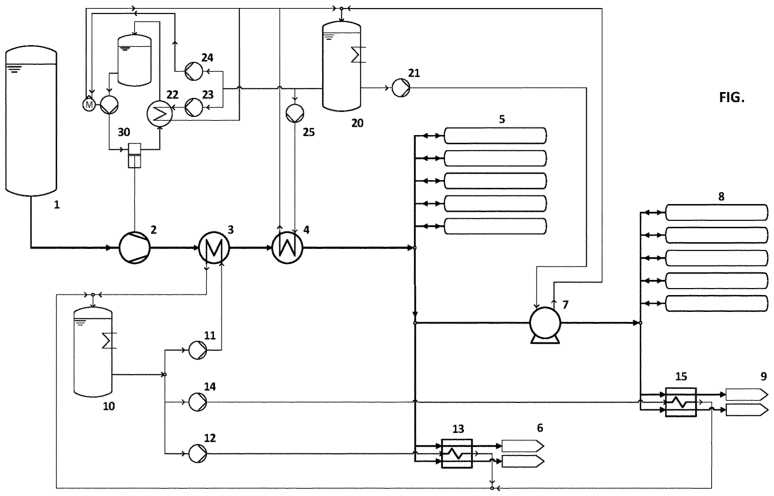

Bei dem in der Figur dargestellten Ausführungsbeispiel der erfindungsgemäßen Wasserstoff-Tankstelle sind zwei Wärmeübertragersysteme vorgesehen. In ihnen zirkuliert jeweils ein Kälteträger. Hierfür eignen sich insbesondere Gemische aus Wasser und Gefrierschutzmittel, wie Glykol (z. B. Ethylenglykol, Propylenglykol und dergleichen) oder Salzen (z. B. Kaliumformiat o. ä.). Diese Kälteträger dienen in den Wärmetauschern 3 und 4 der Anwärmung des mittels der Kryopumpe verdichteten Wasserstoffs. Die dabei vom Wasserstoff an die Kälteträger abgegebene Kälte wird in den beiden Wärmeübertragersystemen gespeichert. Die beiden Wärmeübertragersysteme weisen jeweils einen Speicherbehälter 10 und 20, einen Wärmetauschern 3 und 4 sowie mehrere Pumpen 11, 12, 14, 21, 23 und 24 auf. Darüber hinaus weist das erste Wärmeübertragersystem, das Kälte auf einem niedrigeren Temperaturniveau speichert, zwei, den Dispensern 6 und 9 zugeordnete Wärmetauscher 13 und 15 auf.

Beim dargestellten Ausführungsbeispiel dient das erste Wärmeübertragersystem der Konditionierung des über den ersten und zweiten Dispenser 6 und 9 abzugebenden Wasserstoffs, wozu der Kälteträger aus dem Speicherbehälter 10 entnommen und mittels der Pumpen 12 und 14 den Wärmetauschern 13 und 15 zugeführt wird. Mittels der Pumpe 11 wird der Kälteträger dem der Anwärmung des Wasserstoffs dienenden Wärmetauscher 3 zugeführt. Das zweite Wärmeübertragersystem, das Kälte auf einem höheren Temperaturniveau speichert, dient der Kühlung des Verdichters 7, wozu der verwendete Kälteträger aus dem Speicherbehälter 20 entnommen und mittels der Pumpe 21 dem Verdichter 7 zugeführt wird. Der beschriebenen Kryopumpe 2 ist ein hydraulischer Antrieb 30 zugeordnet. Sowohl die Pumpe des Ölkreislaufes dieses Antriebs 30 als auch der vorzusehende Wärmetauscher 22 werden mittels des Kälteträgers des zweiten Wärmeübertragersystems gekühlt, weshalb ebenfalls entsprechende Pumpen 23 und 24 vorgesehen sind. Die Pumpe 25 dient der Förderung des Kälteträgers durch den beschriebenen Wärmetauscher 4.

## Patentansprüche

1. Wasserstoff-Tankstelle, aufweisend
a) einen Speicherbehälter (1) für verflüssigten Wasserstoff,
b) eine Kryopumpe (2), mittels der aus dem Speicherbehälter (1) entnommener Wasserstoff auf einen Zwischendruck gefördert wird,
c) einen ersten Speicherbehälter (5), der der Speicherung des auf den Zwischendruck geförderten Wasserstoffs dient,
d) einen ersten Dispenser (6), der der Abgabe des auf den Zwischendruck geförderten und/oder aus dem ersten Speicherbehälter (5) entnommenen Wasserstoffs dient,
e) einen Verdichter (7), mittels dem der auf einen Zwischendruck geförderte Wasserstoff auf einen Enddruck verdichtet wird,
f) einen zweiten Speicherbehälter (8), der der Speicherung des auf den Enddruck geförderten Wasserstoffs dient,
g) einen zweiten Dispenser (9), der der Abgabe des auf den Enddruck geförderten und/oder aus dem zweiten Speicherbehälter (8) entnommenen Wasserstoffs dient, und
h) wenigstens ein Wärmeübertragersystem (3, 4, 10 - 15, 20 - 24), das der Anwärmung (3, 4) des auf einen Zwischendruck geförderten Wasserstoffs dient,
i) wobei das Wärmeübertragersystem derart ausgebildet ist, dass die in ihm gespeicherte Kälteleistung zur Kühlung des Verdichters (7) und/oder zur Konditionierung (13, 15) des Wasserstoffs am ersten und/oder zweiten Dispensers (6, 9) genutzt werden kann.

2. Wasserstoff-Tankstelle gemäß Anspruch 1, **dadurch gekennzeichnet, dass** das wenigstens eine Wärmeübertragersystem wenigstens einen Wärmetauscher (3, 4), der dem Wärmeaustausch mit dem geförderten Wasserstoff dient, einen Speicherbehälter (10, 20), der der Speicherung des in dem Wärmeübertragersystem zirkulierenden Kälteträgers dient und einen Verdichter (11, 12, 14, 21, 23, 24) aufweist.

3. Wasserstoff-Tankstelle gemäß Anspruch 1 oder 2, **dadurch gekennzeichnet, dass** die Kryopumpe (2) auf einen Zwischendruck von 300 bar bis 600 bar fördert.

4. Wasserstoff-Tankstelle nach einem der vorherigen Ansprüche, **dadurch gekennzeichnet, dass** der Verdichter (7) auf einen Enddruck von 700 bar bis 1000 bar verdichtet.

5. Wasserstoff-Tankstelle nach einem der vorherigen Ansprüche, **dadurch gekennzeichnet, dass** der Verdichter (7) ein Kolbenkompressor ist.

6. Wasserstoff-Tankstelle nach einem der vorherigen Ansprüche, **dadurch gekennzeichnet, dass** der Speicherbehälter (1), die Kryopumpe (2), der Verdichter (7), der erste Speicherbehälter (5), der zweite Speicherbehälter (9), der erste Dispenser (6), der zweite Dispenser (9) und/oder das Wärmeübertragersystem (3, 4, 10 - 15, 20 - 24) redundant ausgebildet sind.

7. Wasserstoff-Tankstelle nach einem der vorherigen Ansprüche, **dadurch gekennzeichnet, dass** in dem wenigstens einen Wärmeübertragersystem ein Kälteträger zirkuliert, der aus einem Gemisch aus Wasser und Gefrierschutzmittel, insbesondere Glykol, vorzugsweise Ethylenglykol und/oder Propylenglykol, oder Salzen, insbesondere Kaliumformiat besteht.
